# EUROPÄISCHE PATENTSCHRIFT

(11) **EP 2 591 255 B1**
(45) Veröffentlichungstag und Bekanntmachung des Hinweises auf die Patenterteilung: **30.03.2016**
(21) Anmeldenummer: 11733998.6
(22) Anmeldetag: 18.06.2011
(51) Int. Cl.: F16J 15/10, F16L 37/40, F16K 15/02

(54) **HOCHDRUCKVERBINDUNG**
HIGH-PRESSURE CONNECTION
LIAISON HAUTE PRESSION

(30) Priorität: 05.07.2010 DE 202010009871 U
(43) Veröffentlichungstag der Anmeldung: 15.05.2013
(73) Patentinhaber: Weh, Erwin, 89257 Illertissen (DE); Weh, Wolfgang, 89257 Illertissen (DE)
(72) Erfinder: Weh, Erwin, 89257 Illertissen (DE); Weh, Wolfgang, 89257 Illertissen (DE)
(74) Vertreter: Fiener, Josef
(86) Internationale Anmeldenummer: PCT/EP2011/003027
(87) Internationale Veröffentlichungsnummer: WO 2012/003927

(56) Entgegenhaltungen:
- EP-A1- 1 577 598
- AU-A4- 2009 100 267
- DE-U1-202007 010 788
- US-A- 2 959 188
- US-A- 3 523 553
- US-A- 5 265 844
- US-A1- 2006 021 659
- US-A1- 2008 018 059

## Beschreibung

Die Erfindung betrifft eine Hochdruckverbindung für die Übertragung von gasförmigen und/oder flüssigen Medien, insbesondere zur Wasserstoff-Betankung von Fahrzeugen, mit den oberbegrifflichen Merkmalen des Anspruches 1.

Mit derartigen Hochdruckverbindungen, wie aus der EP 1 577 598 A1 bekannt, soll eine sichere Übertragung eines Fluids von einer Druckquelle, beispielsweise von einer Betankungsanlage aus, erreicht werden. Wichtig ist hierbei die leckagefreie Ausführung, um einen Austritt in die Umgebung zu vermeiden, insbesondere bei hohen Drücken von bis zu 700 bar und mehr. In der AU 2009 100 267 A4 ist zudem ein Rückschlagventil beschrieben, wobei eine Dichtung mit einem abgerundeten Dichtkopf in Berührung ist, welcher jedoch für Wasserleitungen ausgelegt ist und damit keinen hohen Druckbelastungen ausgesetzt wird.

Besonders wichtig ist die leckagefreie Abdichtung von Rückschlagventilen bei derartigen Hochdruckanschlüssen. Bei steigenden Druckwerten von mehr als 700 bar werden diese Anschlüsse jedoch zunehmend empfindlicher gegen Leckagen, so dass im allgemeinen ein Austritt von z. B. tiefkaltem Wasserstoffgas, zu erwarten ist. Hierbei könnte es zu Unfällen kommen, insbesondere könnte durch Lecks bei unter Druck stehenden Leitungen erheblicher Schaden entstehen. Ein Grund liegt darin, dass die meist verwendeten PTFE-Dichtringe zwar kältefest sind, aber bei konstanter Druckbelastung die negative Eigenschaft haben, zu deformieren (sog. "Kaltfließen", vgl. z. B. Homepage der Fa. Elring). Dabei wird vorgeschlagen, PTFE-Compounds mit verbesserten Druckstandsfestigkeiten zu verwenden, z. B. mit Kohle oder Glasfasern als Füllstoff. Eine Deformation von unter 10% ist damit jedoch kaum erreichbar. Zudem sind aus Kugelventilen auch Verbunddichtungen bekannt, die z. B. Graphitauflagen besitzen. Diese Dichtungen sind jedoch meist für höhere Temperaturen ausgelegt.

Demzufolge liegt der Erfindung die Aufgabe zugrunde, eine Hochdruckverbindung der eingangs genannten Art bei einfacher Bauweise sicherheitstechnisch zu verbessern, so dass Gefahren bzw. Schäden vermieden werden.

Diese Aufgabe wird gelöst durch eine Hochdruckverbindung gemäß den Merkmalen des Anspruches 1. Bevorzugte Weiterbildungen der Erfindung sind Gegenstand der abhängigen Ansprüche.

Die vorgeschlagene Hochdruckverbindung zeichnet sich durch eine besonders hohe Sicherheit und einfache Bauweise aus, da durch die vorgeschlagene zweiteilige Bauweise der Dichtungsträger und der Dichtungseinsatz optimal an die Anforderungen bei hohem Druck angepasst werden können. So besteht der Dichtungsträger aus einem härteren Kunststoff, insbesondere PEEK und der Dichtungseinsatz aus einem weicheren Kunststoff, insbesondere PTFE. Das Begriffpaar "härter - weicher" kann genauer auch mit dem Elastizitätsmodul (auch E- oder Young-Modul) definiert werden. Übliche Kunststoffe wie Polyester (PE) oder Polypropylen (PP) weisen ein E-Modul von ca. 1-2 kN/mm² auf. Die hier bevorzugten Materialien PEEK (Polyetherketone) weisen hingegen etwa 4 kN/mm² und PTFE etwa 0,6 kN/mm² auf. Damit ergibt sich eine doppelte oder zweistufige Abdichtung, wenn zwei Dichtkanten an dem Dichtring vorgesehen sind, eine am "weicheren" Dichtungseinsatz und eine am "härteren" Dichtungsträger. Das PTFE "schmiegt" sich somit am Dichtkolben des Rückschlagventils an und mit zunehmenden "Kaltfließen" (abhängig von der Belastungszeit, dem Druckwert und der Temperatur) wird die Abdichtung zusätzlich von der Dichtkante am PEEK-Dichtungsträger unterstützt. Hierdurch ergibt sich eine sehr gute Abdichtung auch im Hochdruckbereich von 700 bar und mehr, nämlich eine doppelte Abdichtung zum Kolben des Rückschlagventils einerseits im Niederdruckbereich gegen den "weicheren" Dichtungseinsatz und im Hochdruckbereich vorwiegend gegen den "steiferen" Dichtungsträger. So kann einem Versagen der Ring-Dichtung vorgebeugt werden und mit der vorgeschlagenen Hochdruckverbindung sicher und langfristig vermieden werden kann, dass Gas oder Flüssigkeit austreten kann. Dies ist insbesondere aus Unfallschutzgründen wichtig, aber auch zum Umweltschutz.

Es sei darauf hingewiesen, dass sich die vorgeschlagene Hochdruckverbindung für verschiedene Anschlüsse eignet, insbesondere zur Kfz-Betankungsanschlüsse im Fahrzeugbau, aber auch bei Industrieanlagen. Diese Hochdruckverbindung kann dabei an beliebiger Stelle in kompakter Weise eingebaut sein und andere Ventile als Rückschlagventile aufweisen. Nachfolgend wird ein Ausführungsbeispiel anhand der beiliegenden Zeichnung näher erläutert und beschrieben. Hierin zeigt:
Fig. 1 eine geradlinige Hochdruckverbindung im Längsschnitt; und
Fig. 2 eine vergrößerte Darstellung der Ring-Dichtung nach Fig. 1.

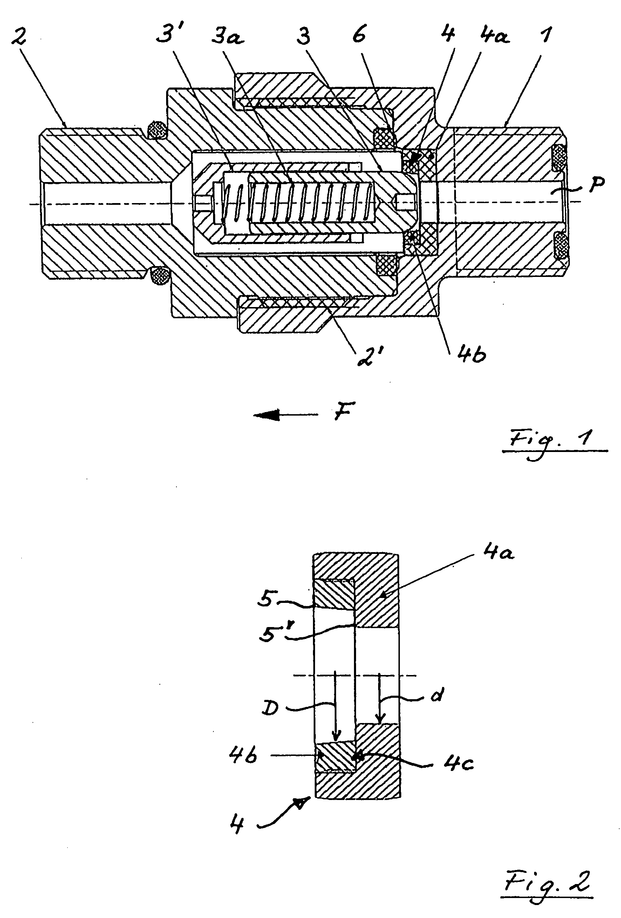

In Fig. 1 ist ein Ausführungsbeispiel einer Hochdruckverbindung 1 mit einem zweiteiligen Gehäuse 2 gezeigt, das hier mit einem Gewinde 2' verschraubt wird, um an der hier rechten Stirnseite einen Einlass zu einer Passage P zu bilden. Das Medium, insbesondere Gas fließt entsprechend dem Pfeil F zur linken Seite, um dort an einen nicht dargestellten Drucktank weitergeleitet zu werden. Zur Abdichtung ist im Inneren des Gehäuses 2 neben üblichen 0-Ringdichtungen 6 ein Rückschlagventil 3' vorgesehen, dass mit seinem Dichtkolben 3 bzw. dessen stirnseitigen Ende an einer Ring-Dichtung 4 anliegt und somit gegen die Durchflussrichtung F abdichtet. Der Dichtkolben 3 wird hierbei von einer Feder 3a beaufschlagt, also hier nach rechts gedrückt.

Die Dichtung 4 ist neuerungsgemäß zweiteilig aufgebaut, nämlich aus einem Dichtungsträger 4a, in den ein Dichtungseinsatz 4b eingesetzt ist. Dabei besteht der Dichtungsträger 4a aus einem härteren Kunststoff und der Dichtungseinsatz 4b aus einem weicheren Kunststoff. Bevorzugt ist der Dichtungsträger 4a aus PEEK und der Dichtungseinsatz 4b aus PTFE gebildet. Der Dichtungsträger 4a weist in vorteilhafter Ausführung eine abgestufte Ringform mit einer Abstufung 4c (vgl. 2) auf, wobei der Dichtungseinsatz 4b in der Abstufung 4c befestigt ist, insbesondere eingeschraubt ist. Hierdurch ergibt sich eine sichere Abdichtung der Zwischenspalte und zur Umgebung hin.

Nach Fig. 2 weist der Dichtungseinsatz 4b zudem einen größeren Innendurchmesser D als der Durchlass d (hier entsprechend dem Querschnitt der Passage P) des Dichtungsträger 4a und der Dichtungseinsatz 4b bevorzugt eine konische Innenform auf, die sich zum Dichtkolben 3 hin erweitert. Hierdurch wird eine strömungsgünstige Durchleitung des Mediums erzielt, aber auch eine sichere Abdichtanlage des stirnseitigen Endes des Dichtkolbens 3, der dort abgerundet sein kann (vgl. Fig. 1). Somit weist die Dichtung 4 zwei "hintereinandergeschaltete" Dichtkanten 5, 5' auf, eine am Dichtungseinsatz 4b und eine am Dichtungsträger 4a.

Das Gehäuse 2 kann hierbei in Anpassung an das zu übertragende Fluid, insbesondere an die jeweils gewünschten Zuführwinkel, Durchlassquerschnitte usw., beispielsweise auch gekröpft oder abgewinkelt gestaltet sein. Vorzugsweise besteht der Dichtungseinsatz 4b und damit serine ringförmige Dichtkante 5 aus PTFE, während der Dichtungsträger 4a mit seiner Dichtkante 5' aus PEEK (Polyetheretherketon) hergestellt ist, da dieser widerstandsfähige Werkstoff auch bei extremen Minustemperaturen und/oder hohen Druckwerten eine hohe Medienbeständigkeit und Dichtheit bietet.

## Patentansprüche

1. Hochdruckverbindung für die Übertragung von gasförmigen und/oder flüssigen Medien, insbesondere zur Wasserstoff-Betankung von Fahrzeugen, umfassend ein Gehäuse (2) mit einer Medienpassage (P) und einem Dichtkolben (3), dessen stirnseitiges Ende gegenüber einer Ring-Dichtung abdichtend angeordnet ist, wobei die Dichtung (4) einen Dichtungsträger (4a) aufweist, in den ein Dichtungseinsatz (4b) eingesetzt ist, wobei der Dichtungsträger (4a) aus einem härteren Kunststoff und der Dichtungseinsatz (4b) aus
einem weicheren Kunststoff besteht,
**dadurch gekennzeichnet, dass**
die Dichtung (4) zwei Dichtkanten (5, 5') aufweist, eine am Dichtungseinsatz (4b) und eine am Dichtungsträger (4a).

2. Hochdruckverbindung nach Anspruch 1, **dadurch gekennzeichnet, dass** der Dichtungsträger (4a) aus PEEK besteht.

3. Hochdruckverbindung nach Anspruch 1 oder 2, **dadurch gekennzeichnet, dass** der Dichtungseinsatz (4b) aus PTFE besteht.

4. Hochdruckverbindung nach einem der Ansprüche 1 bis 3, **dadurch gekennzeichnet, dass** der Dichtungsträger (4a) eine abgestufte Ringform mit einer Abstufung (4c) aufweist, wobei der Dichtungseinsatz (4b) in der Abstufung (4c) befestigt ist, insbesondere eingeschraubt ist.

5. Hochdruckverbindung nach einem der Ansprüche 1 bis 4, **dadurch gekennzeichnet, dass** der Dichtungseinsatz (4b) einen größeren Innendurchmesser (D) als der Durchlass (d) des Dichtungsträgers (4a) aufweist.

6. Hochdruckverbindung nach einem der Ansprüche 1 bis 5, **dadurch gekennzeichnet, dass** der Dichtungseinsatz (4b) eine konische Innenform aufweist, die sich zum Dichtkolben (3) hin erweitert.

## Claims

1. High-pressure connection for transferring gaseous and/or liquid media, in particular for refueling of vehicles with hydrogen, comprising a housing (2) having a media passage (P) and a sealing piston (3), wherein its front end is tightly arranged with respect to a ring seal, wherein the seal (4) has a seal carrier (4a), into which a sealing insert (4b) is inserted, wherein the seal carrier (4a) is made of a harder plastic and the seal insert (4b) consists of a softer plastic,
**characterized in that**
the seal (4) has two sealing edges (5, 5'), one on the sealing insert (4b) and one on the seal carrier (4a).

2. High-pressure connection according to claim 1, **characterized in that** the seal carrier (4a) is made of PEEK.

3. High-pressure connection according to claim 1 or 2, **characterized in that** the sealing insert (4b) is made of PTFE.

4. High-pressure connection according to one of claims 1 to 3, **characterized in that** the seal carrier (4a) has a stepped annular shape with a step (4c), wherein the sealing insert (4b) is mounted in the step (4c), in particular screwed-in.

5. High-pressure connection according to one of claims 1 to 4, **characterized in that** the sealing insert (4b) has a larger inner diameter (D) than the passage (d) of the seal carrier (4a).

6. High-pressure connection according to one of claims 1 to 5, **characterized in that** the sealing insert (4b) has a conical inner shape, widening towards the sealing piston (3).

## Revendications

1. Liaison haute pression pour le transfert de produits gazeux et/ou liquides, en particulier pour le réapprovisionnement de véhicules en hydrogène, comprenant un boîtier (2) avec un passage (P) pour le fluide et avec un piston d'étanchéité (3) dont l'extrémité frontale est disposée de manière à créer l'étanchéité relativement à un joint d'étanchéité annulaire, sachant que le joint d'étanchéité (4) présente un porte-joint (4a) dans lequel est inséré un élément d'insertion (4b) de joint d'étanchéité, sachant que le porte-joint (4a) est constitué d'un plastique plutôt dur et l'élément d'insertion (4b) de joint d'étanchéité d'un plastique plutôt souple, **caractérisée en ce que** le joint d'étanchéité (4) présente deux arêtes d'étanchéité (5, 5'), une sur l'élément d'insertion (4b) de joint d'étanchéité et une sur le porte-joint (4a).

2. Liaison haute pression selon la revendication 1, **caractérisée en ce que** le porte-joint (4a) est réalisé en polyétheréthercétone (PEEK).

3. Liaison haute pression selon la revendication 1 ou 2, **caractérisée en ce que** l'élément d'insertion (4b) de joint d'étanchéité est réalisé en polytétrafluoréthylène (PTFE).

4. Liaison haute pression selon l'une des revendications 1 à 3, **caractérisée en ce que** le joint d'étanchéité (4) présente une forme annulaire étagée avec un gradin (4c), sachant que l'élément d'insertion (4b) de joint d'étanchéité est fixé dans le gradin (4c), en particulier par vissage.

5. Liaison haute pression selon l'une des revendications 1 à 4, **caractérisée en ce que** l'élément d'insertion (4b) de joint d'étanchéité présente un plus grand diamètre intérieur (D) que le passage (d) du porte-joint (4a).

6. Liaison haute pression selon l'une des revendications 1 à 5, **caractérisée en ce que** l'élément d'insertion (4b) de joint d'étanchéité présente une forme intérieure conique, qui s'élargit en direction du piston d'étanchéité (3).
